# EUROPEAN PATENT APPLICATION

(11) **EP 2 306 292 A1**
(43) Date of publication of application: **06.04.2011**
(21) Application number: 09290746.8
(22) Date of filing: 30.09.2009
(51) Int. Cl.: G06F 3/06

(54) **Data storage system and method of operating a data storage system**

(71) Applicant: Alcatel Lucent, 75008 Paris (FR)
(72) Inventor: Krahn, Oliver, 91056 Erlangen (DE)
(74) Representative: Schäfer, Wolfgang

(57) **Abstract**

The present invention relates to a data storage system (100) comprising a plurality of data storage units (110a, 110b, ..), user interface means (120) capable of establishing a data connection with a user device (200), and connecting means (130) configured to establish a data connection between the user interface means (120) and at least one of said data storage units (110a, 110b, ..).

## Description

### Field of the Invention

The present invention relates to data storage systems.

The present invention further relates to a method of operating data storage systems.

### Background

Contemporary data storage systems are e.g. accessible via the Internet, particularly the World Wide Web (WWW), or other data networks. Users of such systems are assigned a certain amount of data storage space and may e.g. upload data to be stored to said systems.

The conventional data storage systems are disadvantageous in that they are based on storage devices which are arranged in structures that are unknown to the user and which thus offer no security guarantees. Consequently, the users experience a feeling of uncertainty particularly in cases where sensitive data is to be stored.

### Summary

Accordingly, there is a need to provide improved data storage systems and operating methods which avoid the disadvantages of prior art.

Regarding the above mentioned data storage system, this object is achieved according to the present invention by said system comprising a plurality of data storage units, user interface means capable of establishing a data connection with a user device, and connecting means configured to establish a data connection between the user interface means and at least one of said data storage units.

The inventive data storage system advantageously enables to establish a data connection between the user device and a storage device in a controlled manner. Particularly, the inventive connecting means do not rely on the comparatively unsecure public network infrastructure such as the WWW and thus offer an improved and secure access to storage space.

The dedicated connecting means rather provide for a secure data and storage access.

According to an advantageous embodiment of the invention, said data storage units are physically separated from each other thus guaranteeing an effective protection of data locally stored within a specific storage unit. Particularly, the inventive storage units do not share a common interface for connection and data transmission with said connecting means.

According to a further embodiment of the present invention, the inventive storage units may comprise at least one optical and/or magnetic and/or electronic storage device.

Said storage devices may e.g. comprise hard disk drives and/or solid state disk drives.

To provide increased data security, said hard disk drives and/or solid state disk drives and/or other storage devices of the inventive storage units may be configured to form a RAID, redundant array of independent disks, configuration which is per se known and enables a kind of automated backup in form of redundant data storage.

According to a further aspect of the present invention, the storage units may comprise different types of storage devices, and said data storage units are configured to, preferably periodically, transfer data from a first type of storage device to a second type of storage device and/or to convert stored data from a first data format to a second data format, which further increases the chances to maintain integrity of stored data for a long time.

To enable a flexible access to the inventive data storage system, a further variant of the invention proposes that said user interface means are configured to perform a data transmission protocol and/or interface conversion between a user interface port and a further interface port configured to exchange data with said connecting means. Thus, the type of user interface port may be chosen without regard to the internal data transmission within the inventive storage system. For instance, the user interface port may be configured as a USB, universal serial bus, port, and the user interface means may be configured to convert USB data to/from the type of interface and protocol used for internal data transmission within the inventive storage system.

According to a further very advantageous embodiment of the present invention, said connecting means are configured to establish a switched circuit type connection between said user interface means and at least one of said data storage units. Thereby, for a specific data transmission, a direct physical connection may be provided between the user device and a storage unit associated to said user, while there is no possibility to simultaneously access further storage units associated to other users.

One possible implementation of such switched circuit type connection may rely on crossbar switching technology or switching technology also referred to as main distribution frame, MDF.

A further aspect of the present invention is represented by a method of operating a data storage system comprising a plurality of data storage units, user interface means capable of establishing a data connection with a user device, and connecting means configured to establish a data connection between the user interface means and one of said data storage units, said method comprising the following steps: detecting a data connection request issued from a user and/or a user's device, determining a storage unit associated to said user and/or user's device, establishing a data connection between the user interface means and said storage unit associated to said user and/or user's device.

According to an advantageous embodiment of the inventive method, said step of establishing comprises establishing a switched circuit type connection between said user interface means and said storage unit associated to said user and/or user's device.

According to an advantageous embodiment of the inventive method, said data storage units comprise different types of storage devices, and said data storage units, preferably periodically, transfer data from a first type of storage device to a second type of storage device and/or convert stored data from a first data format to a second data format.

### Brief Description of the Figures

Further features, aspects and advantages of the present invention are given in the following detailed description with reference to the drawings in which:
- Figure 1: depicts a schematic block diagram of a data storage system according to the present invention,
- Figure 2: depicts a schematic block diagram of a data storage unit according to the present invention, and
- Figure 3: depicts a flow chart of a method according to the present invention.

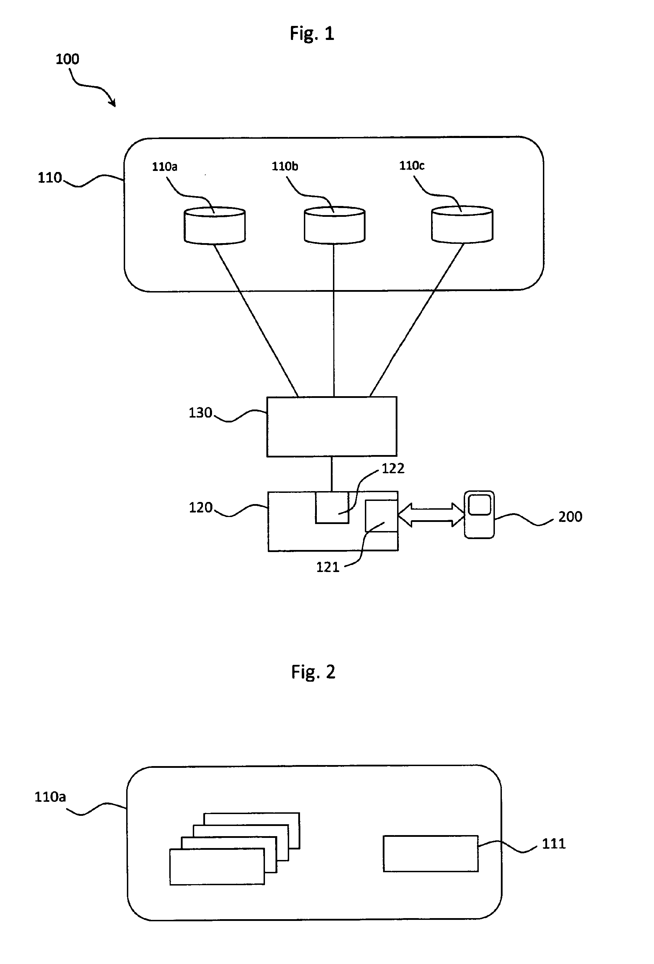

Figure 1 depicts a first embodiment of the inventive data storage system 100. The data storage system 100 comprises a data storage structure 110 for storing data, user interface means 120 for implementing a user interface of the inventive data storage system 100, and connecting means 130 for establishing a data connection between the user interface means 120 and at least one storage unit 110a comprised within the data storage structure 110.

The inventive data storage system 100 advantageously enables to establish a data connection between a user device 200 and a storage device that is part of the inventive data storage structure 110 in a secure and controlled manner. This is due to the dedicated connecting means 130 which are configured to establish a direct physical connection between a respective storage unit 110a and the user interface means 120.

Particularly, the inventive connecting means 130 do not rely on comparatively unsecure public network infrastructure such as the WWW and thus offer an improved and secure access to storage space implemented in form of the data storage structure 110. The dedicated connecting means 130 rather provide for a secure data and storage access.

According to an advantageous embodiment of the invention, said data storage units 110a, 110b, 110c are physically separated from each other thus guaranteeing an effective protection of data locally stored within a specific storage unit. Particularly, the inventive storage units 110a, 110b, 110c do not share a common interface for connection and data transmission with said connecting means.

Thus, in contrast to conventional data storage systems, which e.g. provide storage space for different users on the same physical storage medium, the inventive system provides a very high degree of data security. Preferably, each user of the inventive data storage system 100 is assigned a dedicated storage unit 110a, 110b, 110c.

According to a preferred embodiment of the inventive method, a user or user device such as a PDA 200 (Figure 1) may issue a data connection request upon being connected to a user interface port 121 of the user interface means 120. This data connection request signals to the inventive system 100 that a user / a user's device 200 is present and that a data connection to the storage unit 110a associated with said specific user is desired. The data connection request may e.g. comprise information to identify the user and the user's PDA 200 and/or further security related information.

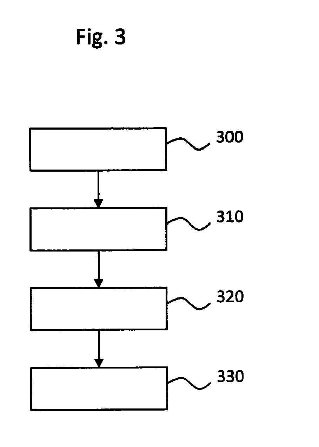

In a first step 300 (Figure 3) of the inventive method, the inventive system 100 (Figure 1) detects the data connection request that has been issued from the user and/or the user's device 200.

After that, e.g. upon a positive check of the user's identification, a specific storage unit 110a is determined which is associated to said user and/or user's device 200, cf. step 310.

If said storage unit 110a associated to said user has been determined in step 310, a data connection is established, step 320, between the user interface means 120 and said specific storage unit 110a associated to said user and/or user's device 200.

Thus, the user of the PDA 200 may access data stored on said storage unit 110a via per se conventional data exchange methods, step 330.

For instance, the user interface port 121 of the user interface means 120 may be configured as a universal serial bus, USB, port to enable many different devices 200 to be connected to the inventive system 100. Further interface systems may also be used for implementing the user interface port 121.

The user interface means 120 also comprise a further interface port 122 (Figure 1) which establishes a data connection to said connecting means 130.

The user interface means 120 are preferably configured to perform a data transmission protocol and/or interface conversion between the user interface port 121 and the further interface port 122 to enable data exchange between the device 200 connected to the user interface port 121 and the connecting means 130.

Alternatively, if the further data connection from the connecting means 130 to the storage units 110a, .. is also implemented according to the USB standard, it is also possible that the user interface port 121 is directly connected to the further interface port 122, i.e. without the requirement of interface and/or protocol conversion.

A particularly high degree of data security is achieved if said connecting means 130 are configured to establish a switched circuit type connection between said user interface means 120 and at least one of said data storage units 110a, 110b, 110c. That is, the connecting means 130 implement a switching matrix which can establish direct physical connections between data lines to the user interface means 120 and the different storage units 110a, 110b, 110c.

Once such a direct physical connection is established, for instance with the storage unit 110a, there is no possibility for the PDA 200 to gain access to further storage units 110b, 110c also comprised in the system 100.

One possible implementation of such switched circuit type connection may rely on crossbar switching technology or switching technology also referred to as main distribution frame, MDF, within the inventive connecting means 130.

A further advantageous embodiment of the invention proposes that said data storage units 110a, 110b, .. comprise at least one optical and/or magnetic and/or electronic storage device. Particularly, said storage devices may comprise hard disk drives and/or solid state disk drives.

As an example, Figure 2 depicts an embodiment of the inventive data storage unit 110a which comprises a plurality of hard disk drives that are not further specified in the Figure. The data storage unit 110a also comprises a controller device 111 which coordinates operation of the hard disk drives and data exchange with the connecting means 130. The controller device 111 may also provide for encryption of data stored to said storage unit 110a and other features that increase data security.

Said hard disk drives and/or solid state disk drives or any further drives comprised within a storage unit 110a may further be configured to form a RAID, redundant array of independent disks, configuration. For this purpose, the controller device 111 may also be configured to control the RAID operation.

It is preferable that said data storage units 110a, 110b, 110c each comprise different types of storage devices, and that said data storage units 110a, 110b, 110c are configured to, preferably periodically, transfer data from a first type of storage device to a second type of storage device and/or to convert stored data from a first data format to a second data format, which further increases the chances to maintain integrity of stored data for a long time.

The inventive system and method may advantageously be employed to establish a data storage service which can e.g. be offered by banks or other institutions that control an infrastructure capable of hosting the inventive system 100.

For example, a bank may provide the inventive user interface means 120 in a lobby or customer lounge so that customers can access it in the way described above, i.e. by connecting their PDAs 200 and/or notebook PCs and the like to the user interface port 121 (Figure 1).

The inventive data storage structure 110 may also be hosted at the bank's premises, for instance in a vault, so that physical access to the data storage structure 110 is secured by corresponding security standards and protocols.

It is further possible to directly integrate specific storage units 110a in a safe associated with the customer. In this case, the customer may access the data stored on the storage unit 110a by means of the inventive method, i.e. via the user interface means 120. Additionally, the customer may also physically access his safe and directly take his storage unit with him.

According to the present invention, for an operator of the inventive storage system 100 it is also possible to offer different types of storage devices depending on the customer's needs.

By extending the inventive connecting means 130 between different locations, which may e.g. be accomplished using existing private network lines, it is also possible to create a distributed storage environment.

Generally, storage technology used to implement the inventive data storage structure 110 may comprise ROM (read only memory), WORM (write once read many) or WMRM (write many read many) systems that may rely on optical, magnetic or static RAM technology depending on the customer's preferences.

It is also possible to provide a conventional personal computer as a basis for an inventive storage unit 110a, which is expanded by adding the respective storage systems.

The access mechanism to the data stored according to the present invention can be chosen as required. High security physical ports 121 may be provided via the user interface means 120 to connect to the storage unit, as already explained above.

It is further possible to provide dedicated rooms to directly access the media with personal devices. In this case, storage units 110a associated with a specific customer can be collocated in a safe room of a bank.

Preferably, the inventive storage units 110a, 110b, 110c are configured to periodically copy their data to new media and to convert data to new file formats in order to ensure "eternal" readability independent on systems or technology evolution.

The operator of the inventive system, e.g. a bank, may also guarantee access methodology to the stored information for a lifetime without content quality degradation of the content.

The inventive principle enables to store data, particularly personal data, in a secure and protected environment.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Data storage system (100) comprising a plurality of data storage units (110a, 110b, ..), user interface means (120) capable of establishing a data connection with a user device (200), and connecting means (130) configured to establish a data connection between the user interface means (120) and at least one of said data storage units (110a, 110b, ..).

2. Data storage system (100) according to claim 1,
wherein said data storage units (110a, 110b, ..) are physically separated from each other and particularly do not share a common interface for connection to said connecting means (130).

3. Data storage system (100) according to one of the preceding claims, wherein said data storage units (110a, 110b, ..) comprise at least one optical and/or magnetic and/or electronic storage device.

4. Data storage system (100) according to claim 3,
wherein said storage devices comprise hard disk drives and/or solid state disk drives, and wherein said hard disk drives and/or solid state disk drives are configured to form a RAID, redundant array of independent disks, configuration.

5. Data storage system (100) according to one of the claims 3 to 4, wherein said data storage units (110a, 110b, ..) comprise different types of storage devices, and wherein said data storage units (110a, 110b, ..) are configured to, preferably periodically, transfer data from a first type of storage device to a second type of storage device and/or to convert stored data from a first data format to a second data format.

6. Data storage system (100) according to one of the preceding claims, wherein said user interface means (120) are configured to perform a data transmission protocol and/or interface conversion between a user interface port (121) and a further interface port (122) configured to exchange data with said connecting means (130).

7. Data storage system (100) according to one of the preceding claims, wherein said connecting means (130) are configured to establish a switched circuit type connection between said user interface means (120) and at least one of said data storage units (110a, 110b, ..).

8. Method of operating a data storage system (100) comprising a plurality of data storage units (110a, 110b, ..), user interface means (120) capable of establishing a data connection with a user device (200), and connecting means (130) configured to establish a data connection between the user interface means (120) and one of said data storage units (110a, 110b, ..), said method comprising the following steps:
detecting (300) a data connection request issued from a user and/or a user's device (200), determining (310) a storage unit (110a) associated to said user and/or
user's device (200), establishing (320) a data connection between the user interface means (120) and
said storage unit (110a) associated to said user and/or user's device (200).

9. Method according to claim 8, wherein said step of establishing (320) comprises establishing a switched circuit type connection between said user interface means (120) and said storage unit (110a) associated to said user and/or user's device (200).

10. Method according to one of the claims 8 to 9, wherein said data storage units (110a, 110b, ..) comprise different types of storage devices, and wherein said data storage units (110a, 110b, ..), preferably periodically, transfer data from a first type of storage device to a second type of storage device and/or convert stored data from a first data format to a second data format.
